# EUROPEAN PATENT APPLICATION

(11) **EP 4 769 719 A1**
(43) Date of publication of application: **01.07.2026**
(21) Application number: 25822448.4
(22) Date of filing: 01.04.2025
(51) Int. Cl.: H01M 50/242, H01M 50/291, H01M 50/262, B60L 50/64

(54) **BATTERY PACK AND VEHICLE COMPRISING SAME**

(30) Priority: 12.06.2024 KR 20240076522
(71) Applicant: LG ENERGY SOLUTION, LTD., Seoul 07335 (KR)
(72) Inventor: LEE, Gi Hwan, Yuseong-gu, Daejeon 34122 (KR); PARK, Dong Ho, Yuseong-gu, Daejeon 34122 (KR); KWON, Woo Yong, Yuseong-gu, Daejeon 34122 (KR); PARK, Jeong Jae, Yuseong-gu, Daejeon 34122 (KR)
(74) Representative: BCKIP Part mbB
(86) International application number: PCT/KR2025/004217
(87) International publication number: WO 2025/258818

(57) **Abstract**

The present disclosure introduces a battery pack and a vehicle including the same, in which maintenance is easily carried out by improving a structure of a crossmember supporting and fixing a cell block to a pack housing, and excellent safety is achieved by effectively absorbing volume expansion caused by swelling of a battery cell and the cell block.

## Description

### [TECHNICAL FIELD]

The present disclosure relates to a battery pack having improved maintainability and reliability and a vehicle including the same.

### [BACKGROUND ART]

Recently, technologies for reducing carbon emissions have been actively developed to solve environmental problems such as abnormal temperatures.

In order to reduce carbon emissions, energy has to be produced in an eco-friendly way instead of using fossil fuels, the produced energy has to be stored in a form of electrical energy, and the stored electrical energy has to be used in vehicles, various industrial sites, and homes.

In order to utilize electric energy for reducing the carbon emissions, it is essential to use batteries which can store and extract electric energy. Therefore, in order to sufficiently store electric energy and use electric energy without inconvenience, it is essential to secure battery performance.

The batteries mainly utilize a redox reaction of metal ions, and the metal ions are used at a high density to increase capacity, charge/discharge performance, and efficiency of the batteries.

Extensive research has been conducted on substances forming an electrolyte or solid electrolytes.

However, in general, as the battery performance is improved, there is a problem of degraded stability.

In a case of the batteries used in vehicles, industry, and homes, the batteries are manufactured as physical units called packs. Battery packs have multiple battery cells incorporated and sealed in a battery case. In this manner, the battery packs fulfill functions of preventing outward fire spreading even when there is an accident such as thermal runaway of the batteries, and protecting the battery cells inside the battery packs from being deteriorated due to an external environment or damaged due to physical reasons.

In some cases, the battery packs may have multiple battery cells incorporated in an intermediate form of modules or cell module assemblies (CMA). This structure is manufactured through a process in which the multiple battery cells are first individually assembled into the modules, and thereafter, the modules assembled in this way are integrated into a single large pack. This process may result in additional manufacturing processes and costs.

In addition, additional spaces and configuration elements may be required at coupling portions between the modules and the packs. Consequently, the additional spaces and configuration elements may act as factors that increase a size and a weight of the battery packs and limit energy density of the battery packs.

In order to solve these problems, there is a cell-to-pack in which an intermediate form of the modules is omitted and the battery cells are directly assembled into the packs. Since an intermediate structure of the modules is omitted in the cell-to-pack to more densely dispose the battery cells, an available space inside the pack may be optimized, and a weight and a volume of the battery pack may be reduced. In addition, the manufacturing process may be simplified, and the costs may be reduced. This result may lead to an improvement in overall performance of electric vehicles, especially an increase in a driving-available distance. Therefore, the cell-to-pack is recognized as an important and advanced technology for reducing manufacturing costs of the batteries of the electric vehicles, reducing environmental impacts, and improving energy efficiency of the electric vehicles.

Meanwhile, the batteries may experience volume expansion, known as swelling, during charging and discharging processes. This expansion is caused by substances accumulated inside electrodes as lithium ions move between an anode and a cathode. These accumulated substances increase a volume of the electrodes, and increase a pressure inside the cells. The swelling may negatively affect lifespans and performance of the battery cells. In severe cases, the swelling may damage structural integrity of the battery cells, and may result in a safety hazard.

Items described as the above-described background art are only intended to facilitate understanding of the background of the present disclosure, and should not be understood as an acknowledgment that the present disclosure corresponds to the related art already known to those skilled in the art.

### [DETAILED DESCRIPTION OF INVENTION]

### [TECHNICAL PROBLEMS]

The present disclosure is proposed to solve these problems, and an object of the present disclosure is to provide a battery pack and a vehicle including the same, in which maintenance is easily carried out by improving a structure of a crossmember supporting and fixing a cell block to a pack housing, and excellent safety is achieved by effectively absorbing volume expansion caused by swelling of a battery cell and the cell block.

Technical aspects to be achieved in the present disclosure are not limited to technical aspects described above, and other technical aspects not described herein can be clearly understood by those skilled in the art to which the present disclosure pertains, from the description below.

### [TECHNICAL SOLUTION]

According to the present disclosure, in order to achieve the above-described object, there is provided a battery pack including a plurality of cell blocks configured such that a plurality of battery cells are stacked, a pack housing for accommodating the cell blocks, and a crossmember provided between the cell blocks to support the adjacent cell blocks, the crossmember including a plurality of side beams interlocked with each other, in which protrusion portions protruding toward each other are formed in the side beams, and the protrusion portions formed in the respective side beams are disposed to overlap each other in an interlocked state in a front-rear direction.

For example, the side beam may extend along a width direction of the battery pack, and the protrusion portion may protrude along a length direction of the battery pack.

For example, a plurality of the protrusion portions may be formed apart from each other.

For example, in a plurality of the adjacent side beams, a recess portion into which the protrusion portion of another side beam is inserted may be formed between the adjacent protrusion portions of one side beam.

For example, the side beams may be respectively provided on both sides of the cell block, and protruding positions on the side beams may be different between the protrusion portion of one side beam and the protrusion portion of the other side beam.

For example, fastening protrusions protruding toward each other may be formed in a plurality of the adjacent side beams, the fastening protrusions may be formed in an interlocked form in which the fastening protrusions correspond to each other, a width in a length direction of the fastening protrusion may be smaller than a width in a length direction of the protrusion portion, and a width in a width direction of the fastening protrusion may be smaller than a width in a width direction of the protrusion portion.

For example, the fastening protrusions formed in the respective side beams may be disposed to overlap each other in the interlocked state in the length direction, and may prevent a deviation of the plurality of adjacent side beams in the length direction.

For example, the fastening protrusions formed in the respective side beams may be disposed to overlap each other in the interlocked state in the width direction, and may prevent a deviation in the width direction of the adjacent side beams.

For example, the battery pack may further include a fastening mechanism penetrating the side beam and the pack housing to fasten the crossmember and the pack housing. A through-hole through which the fastening mechanism penetrates may be formed in the side beam.

For example, the fastening mechanism may have a column shape extending in a height direction.

For example, in the side beam, the through-hole may be formed in the protrusion portion.

For example, the through-hole may have an elongated hole shape extending in one direction.

For example, the through-hole having an elongated hole shape extending in one direction may be formed in one side beam in the plurality of adjacent side beams, and the through-hole having a perfect circle with a constant diameter may be formed in the other side beam.

For example, a plurality of the through-holes may be formed apart from each other in the side beam.

For example, some through-holes in the plurality of through-holes may have an elongated hole shape extending in one direction.

For example, the through-hole located in a central portion in the plurality of through-holes may have the elongated hole shape extending in one direction.

For example, the through-hole located between the adjacent through-holes in the plurality of through-holes may have the elongated hole shape extending in one direction.

According to the present disclosure, there is provided a vehicle including the battery pack.

### [EFFECT OF INVENTION]

According to a battery pack and a vehicle including the same of the present disclosure, it is possible to provide a battery pack and a vehicle including the same, in which maintenance is easily carried out by improving a structure of a crossmember supporting and fixing a cell block to a pack housing, and excellent safety is achieved by effectively absorbing volume expansion caused by swelling of a battery cell and the cell block.

Advantageous effects that can be achieved by the present disclosure are not limited to advantageous effects described above, and other advantageous effects not described herein may be clearly understood by those skilled in the art to which the present disclosure pertains, from the description below.

### [BRIEF DESCRIPTION OF THE DRAWING]

FIG. 1 is a view illustrating a battery pack in the related art.
FIG. 2 is a view illustrating one embodiment of the battery pack of the present disclosure.
FIG. 3 is a view illustrating an example of a cell block and a side beam of the present disclosure.
FIGS. 4, 5 and 6 are views of various embodiments of a crossmember of the present disclosure.
FIGS. 7 and 8 are views of various embodiments of a protrusion portion of the crossmember of the present disclosure.
FIGS. 9 and 10 are views for describing the cell block and the crossmember which are installed in the battery pack of the present disclosure.
FIG. 11 is a view illustrating one embodiment of a vehicle in which the battery pack of the present disclosure is installed.

### [MODE FOR CARRYING OUT THE INVENTION]

In describing embodiments disclosed in the present specification, when it is determined that detailed description of a related known technology may obscure the concept of the embodiments disclosed in the present specification, the detailed description will be omitted. In addition, the accompanying drawings are only intended to facilitate understanding of the embodiments disclosed in the present specification, and technical ideas disclosed in the present specification are not limited by the accompanying drawings, and it should be understood that the embodiments include all modifications, equivalents, or substitutes which are included in the concept and the technical scope of the present disclosure.

Terms including ordinal numbers, such as first, second, and the like, may be used to describe various configuration elements, but the configuration elements are not limited by the terms. The terms are used only to distinguish one configuration element from another configuration element.

Singular expressions include plural expressions unless the context clearly indicates otherwise.

In the present specification, it should be understood that terms such as "comprising" or "having" are intended to specify the presence of a feature, a number, a step, an operation, a configuration element, a component, or a combination thereof described in the specification, and do not exclude in advance a possibility of the presence or the addition of one or more other features, numbers, steps, operations, configuration elements, components, or combinations thereof.

Suffixes such as "module" and "portion" for configuration elements used in the following description are assigned or used interchangeably only for convenience of preparing the specification, and the suffixes themselves do not have mutually distinct meanings or roles.

When it is described that a configuration element is "coupled" or "connected" to another configuration element, a configuration may be directly coupled or connected to another configuration element, but it should be understood that still another configuration element may be present therebetween. On the other hand, when it is described that a configuration element is "directly coupled" or "directly connected" to another configuration element, it should be understood that no other configuration element is present therebetween.

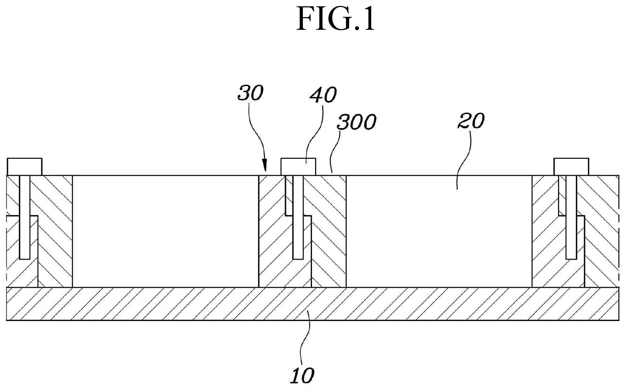

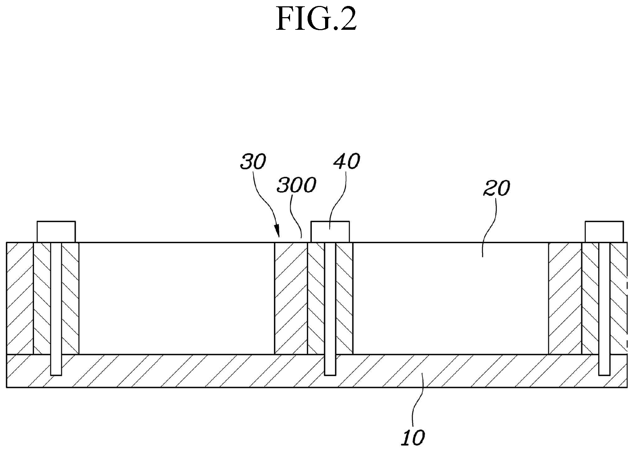

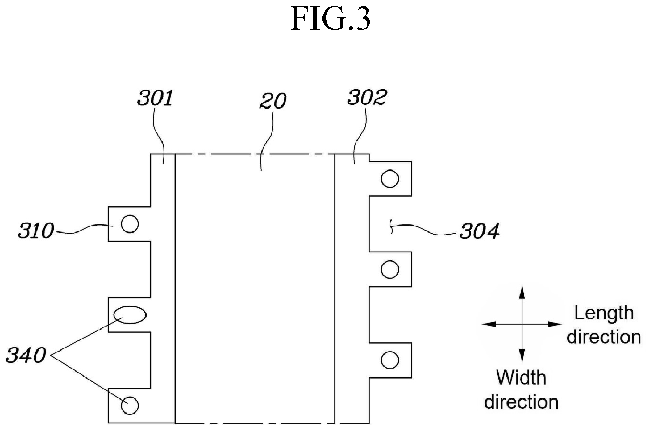

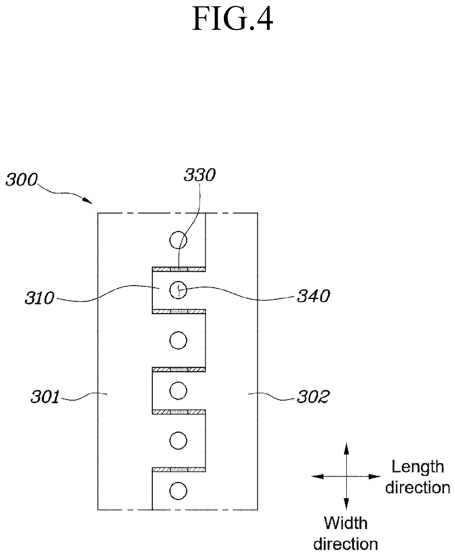

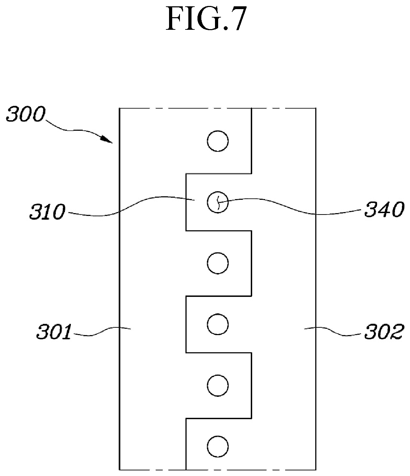

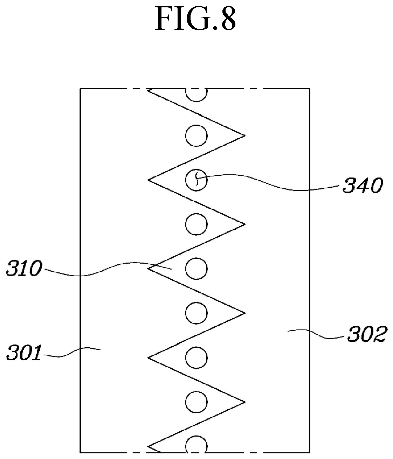

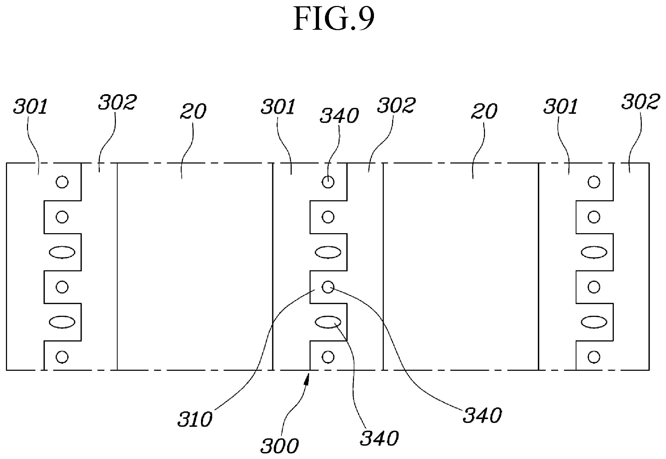

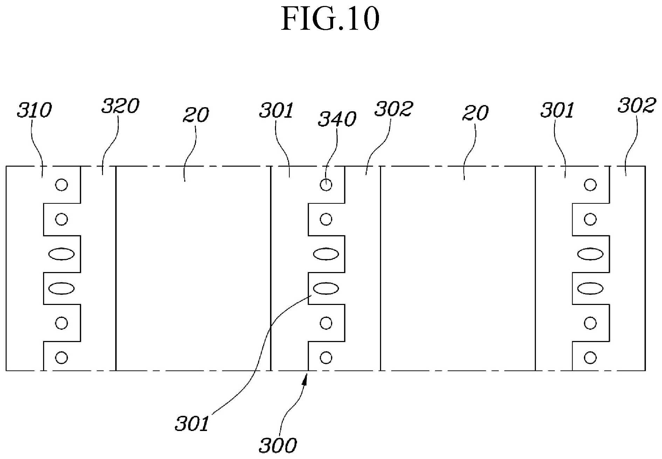

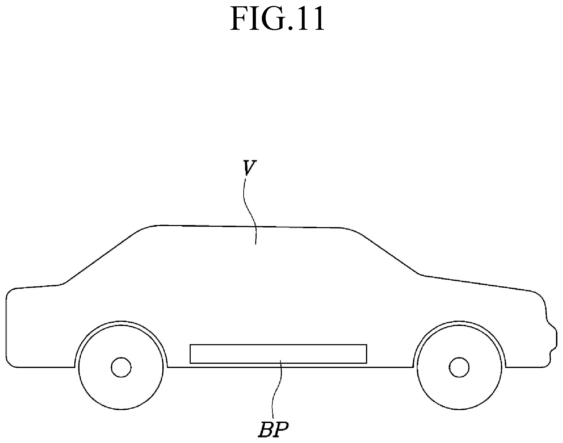

FIG. 1 is a view illustrating a battery pack in the related art. FIG. 2 is a view illustrating an embodiment of the battery pack of the present disclosure. FIG. 3 is a view illustrating an embodiment of a cell block and a side beam of the present disclosure. FIGS. 4, 5, and 6 are views of various embodiments of a crossmember of the present disclosure. FIGS. 7 and 8 are views of various embodiments of a protrusion portion of the crossmember of the present disclosure. FIGS. 9 and 10 are views for describing the cell block and the crossmember which are installed in the battery pack of the present disclosure. FIG. 11 is a view illustrating an embodiment of a vehicle in which the battery pack of the present disclosure is installed.

Hereinafter, embodiments disclosed in the present specification will be described in detail with reference to the accompanying drawings. Regardless of numerals in the drawings, the same reference numerals will be assigned to identical or similar configuration elements, and repeated description thereof will be omitted.

In some cases of battery packs, multiple battery cells are incorporated in an intermediate form of a module or an assembly (cell module assembly, CMA), and in this structure, the module plays a role in fixing and fastening the battery cells to the battery pack. Meanwhile, the above-described structure is manufactured through a process in which the multiple battery cells are first individually assembled into the modules, and thereafter, the modules assembled in this way are integrated into a single large pack. This structure requires multiple assembly steps and complex coupling processes, and each step may result in waste of materials and spaces. This structure may act as factors that increase a size and a weight of the overall battery pack, increase manufacturing costs, and limit energy density of batteries.

In order to solve these problems, there is a cell-to-pack technology. The cell-to-pack technology refers to a technology in which battery cells are directly assembled into a battery pack by skipping a module assembly process as an intermediate step.

In the battery pack to which the cell-to-pack technology is applied, a plurality of battery cells are stacked to form a cell block, and the cell block is directly fixed and fastened to a battery pack BP through a crossmember or the like. Owing to this structure, an intermediate structure such as a module is omitted. Therefore, space efficiency of the battery pack BP may increase, a manufacturing process may be simplified, and a reduced weight may be achieved.

More specifically, the cell block including the plurality of battery cells is directly fixed and fastened to a pack housing via the crossmember without using an intermediate structure such as the module.

In a battery pack to which the cell-to-pack technology in the related art is applied, as illustrated in FIG. 1, adjacent side beams 300 overlap each other in an up-down direction to form a crossmember 30. In the battery pack having this structure, even when one cell block 20 of a plurality of cell blocks 20 requires replacement and reassembly, the adjacent cell block 20 which does not require the replacement has to be replaced and re-assembled. For this reason, unnecessary processes are added during repairing and maintenance processes of the battery pack, thereby resulting in additional costs and times.

However, when the adjacent side beams 300 do not overlap and form the crossmember 30, there is the following problem. The adjacent side beams 300 are not firmly combined, and a load path is not effectively formed. Consequently, the battery pack is vulnerable to an external impact, and the cell block 20 is not effectively fixed and fastened to a pack housing 10.

Therefore, it is necessary to provide a battery pack in which only the cell block 20 requiring the replacement can be separated to facilitate repairing and maintenance works of the battery pack, the adjacent side beams 300 forming the crossmember 30 effectively overlap each other in combination to form a robust load path, and the cell blocks 20 can be effectively fixed and fastened to the pack housing 10.

Meanwhile, the batteries may experience a volume expansion phenomenon known as swelling during charging and discharging processes. This expansion is caused by substances accumulated inside electrodes as lithium ions move between an anode and a cathode, and these accumulated substances increase a volume of the electrodes and increase a pressure inside the cell. The swelling may negatively affect lifespans and performance of the battery cells. In severe cases, the swelling may damage structural integrity of the battery cells, and may result in a safety hazard. Therefore, it is necessary to prepare for this swelling phenomenon. In particular, it becomes necessary to provide a battery pack whose stability is improved by accommodating the volume expansion resulting from the swelling in the battery cells.

In the battery pack of the present disclosure, repairing and maintenance works are easily carried out since only the cell block requiring the replacement can be separated in a state where the adjacent side beams forming the crossmember overlap each other in a front-rear direction. In addition, the plurality of adjacent side beams may be firmly combined to form a load path which is strong against an external impact, and the cell blocks may be effectively fixed and fastened to the battery pack. In addition, the battery pack may effectively respond to the swelling by providing a through-hole having a shape which can accommodate the volume expansion resulting from the swelling in the battery cell. Therefore, safety of the battery pack may be improved.

Specifically, the battery pack according to one embodiment of the present disclosure may include the cell block 20 configured such that the plurality of battery cells are stacked as illustrated in FIG. 2, and the side beams 300 may be combined with both sides of the cell block. A plurality of the cell blocks 20 may be provided, and the battery pack may include a plurality of the side beams 300 provided between the adjacent cell blocks 20 to support the adjacent cell blocks and interlocked with each other.

FIG. 2 is a view illustrating an embodiment of the battery pack of the present disclosure. The battery pack of the present disclosure will be further described with reference to FIG. 2.

A fastening mechanism may be fastened by simultaneously penetrating the side beam 300 of the crossmember 30 and the pack housing 10. More specifically, the fastening mechanism 40 may be fastened by penetrating the overall side beam 300 of the crossmember and a portion of the pack housing 10 as illustrated in FIG. 2.

For example, the fastening mechanism 40 may have a column shape extending in a height direction. More specifically, the fastening mechanism 40 may be a pin, a bolt, a screw, a rivet, or the like. However, this configuration is merely an example, and is not limited thereto.

Meanwhile, the side beam of the crossmember and the pack housing may be fastened at a plurality of separated locations through a plurality of the fastening mechanisms. More specifically, the plurality of fastening mechanisms may penetrate a through-hole 340 to be described later in FIGS. 4 to 10, and may be disposed apart from each other in an extending direction of the side beam. Specifically, the plurality of side beams located apart from each other in the extending direction of the side beam may be disposed to pass through a single straight line. In addition, the plurality of fastening mechanisms may be disposed for each of the side beams, and may be disposed apart from each other perpendicularly to the extending direction of the side beam. As illustrated in FIG. 2, the cell block 20 may be located between or adjacent to the plurality of fastening mechanisms 40 to form a structure in which the fastening mechanisms 40 protect the cell block 20 from an external impact.

Through this structure, the fastening mechanism 40 may fulfill a role to protect the cell block 20 from a load and an external impact which are applied from the outside of the battery pack. This role may prevent deterioration and fire which result from the external impact in the cell block 20 inside the battery pack. In this manner, stability against physical impacts in the battery pack of the present disclosure may increase.

FIG. 3 is a view illustrating the cell block 20 and side beams 301 and 302 according to one embodiment of the present disclosure. Referring to FIG. 3, the cell block 20 and the side beams 301 and 302 of the present disclosure will be further described.

The side beams 301 and 302 may be provided on both sides of the cell block 20 configured such that the plurality of battery cells are stacked. More specifically, the plurality of side beams 301 and 302 provided on both sides of the cell block 20 may include one side beam 301 and the other side beam 302. In addition, the crossmember of the present disclosure may be configured such that one side beam 301 provided on one side of one cell block 20 of a pair of the adjacent cell blocks 20 is combined with the other side beam 302 provided on the other side of the other cell block 20.

A protrusion portion 310 may be formed in one side beam 301 and the other side beam 302 which are provided on both sides of the cell block 20. More specifically, one side beam 301 and the other side beam 302 may extend in a width direction of the battery pack, and the protrusion portion 310 may extend in a length direction of the battery pack. However, this configuration is merely an example, and one side beam 301 and the other side beam 302 may extend in the length direction of the battery pack, and the protrusion portion 310 may extend in the width direction. That is, the extension direction of one side beam 301 and the other side beam 302 and the extension direction of the protrusion portion 310 may be perpendicular.

In addition, a plurality of the protrusion portion 310 may be formed apart from each other, and the plurality of protrusion portions 310 may be disposed apart from each other in the extending direction of the side beam. In addition, a recess portion 304 into which the protrusion portion 310 of the opposite side beam is insertable may be formed between the protrusion portions 310 adjacent to each other. The recess portion 304 may have a shape corresponding to the protrusion portion formed in the side beam on a counter side such that the protrusion portion 310 formed in the side beam on the counter side may be inserted into this recess portion 304 to effectively combine the plurality of adjacent side beams. For example, as illustrated in FIG. 3, the protrusion portion 310 may have a square protrusion shape, and the recess portion 304 may have a square groove shape corresponding to the square protrusion shape. In addition, a width of the protrusion portion 310 and a width of the recess portion 304 may be the same, and a height of the protrusion portion and a height of the recess portion 304 may be the same.

In addition, in the plurality of side beams 301 and 302 provided on both sides of the cell block 20, the protrusion portion 310 of one side beam 301 and the protrusion portion 310 of the other side beam 302 may have different protrusion positions on the side beams 301 and 302. More specifically, the protrusion portion 310 of one side beam 301 and the protrusion portion 310 of the other side beam 302 may be formed to alternately protrude on the side beams 301 and 302. Through this structure, as illustrated in FIGS. 9 and 10, the protrusion portions 310 formed on one side beam 301 and the other side beam 302 may be disposed to overlap in an interlocked state in the front-rear direction.

In addition, the through-hole 340 through which the fastening mechanism 40 penetrates may be formed in the side beams 301 and 302, and the through-hole may be formed in the protrusion portion 310 of the side beam. A plurality of the through-holes 340 may be formed in the side beams 301 and 302 to correspond to the plurality of fastening mechanisms that fasten the side beams 301 and 302 and the pack housing 10 at a plurality of locations, and the plurality of through-holes 340 may be respectively formed in the plurality of protrusion portions 310.

For example, the through-hole 340 may have an elongated hole shape extending to one side. More specifically, the through-hole 340 may have an elongated hole shape extending in the length direction or extending toward the cell block. According to this structure, when the swelling occurs, the elongated hole extending to one side may contract to effectively accommodate the swelling of the battery cell. Therefore, stability of the battery pack may be improved. In addition, there is a lower possibility that the fastening mechanism 40 combined with the through-hole 340 of the elongated hole experiences damage due to force generated by the swelling.

Meanwhile, when all of the through-holes 340 have the elongated hole shape extending to one side, the side beam and the cell block 20 may not be effectively fixed and fastened to the pack housing. In order to prevent this problem, some of the plurality of through-holes 340 may have a perfect circle shape having a constant diameter, and the through-holes 340 may have a shape corresponding to a cross-section of the fastening mechanism 40, and may have a shape to which the fastening mechanism 40 may be fastened without any play. Through this structure, while the volume expansion caused by the swelling of the battery cell and the cell block 20 including the battery cell may be effectively accommodated, the side beam and the cell block 20 may be effectively fixed and fastened to the pack housing 10. In this manner, stability of the battery pack may be improved.

In addition, as illustrated in FIG. 3, the through-hole 340 located in a central portion in the plurality of through-holes 340 may have an elongated hole shape, the through-hole 340 located in an outer peripheral portion may have a perfect circle shape, or may have a shape corresponding to a cross-section of the fastening mechanism, and the through-hole 340 located between adjacent through-holes 340 may have an elongated hole shape. As illustrated in FIG. 3, the through-hole having the elongated hole shape may be formed in any side beam of one side beam 301 and the other side beam 302. Through this structure, the volume expansion caused by the swelling in the battery cell and the cell block 20 including the battery cell may be concentrated to the central portion. Therefore, the stability of the battery pack of the present disclosure may be further improved.

FIGS. 4 to 6 are views of various embodiments of the crossmember of the present disclosure. The crossmember of the present disclosure will be described with reference to FIGS. 4 to 6.

As described above, the crossmember 30 may be formed by combining one side beam 301 provided in one cell block of the adjacent cell blocks 20 and the other side beam 302 provided in the other cell block.

In addition, the protrusion portions 310 protruding toward each other may be formed in the plurality of adjacent side beams 301 and 302, and the protrusion portions 310 respectively formed in the side beams 301 and 302 may be disposed to overlap in an interlocked state in the front-rear direction. Therefore, the side beams 301 and 302 may be firmly combined to form the crossmember of the present disclosure.

For example, as illustrated in FIGS. 4 to 6, fastening protrusions 330 protruding toward each other may be formed in the plurality of adjacent side beams 301 and 302. The fastening protrusions 330 provided in the plurality of adjacent side beams 301 and 302 may be formed to correspond to each other in an interlock form. A width in the length direction of the fastening protrusion 330 may be smaller than a width in the length direction of the protrusion portion 310, and a width in the width direction of the fastening protrusion 330 may be smaller than a width in the width direction of the protrusion portion 310.

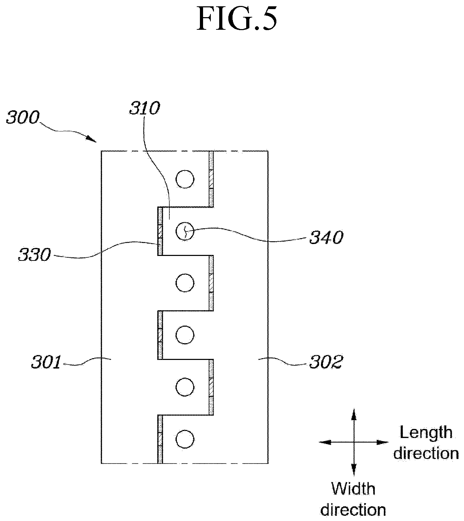

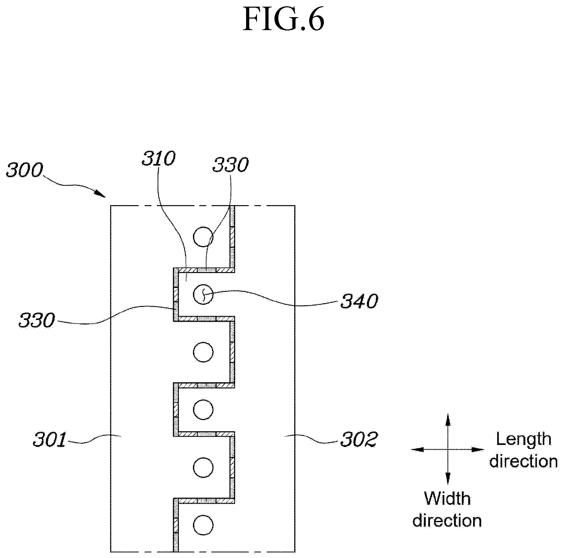

More specifically, as illustrated in FIG. 4, the fastening protrusions 330 formed in the plurality of adjacent side beams 301 and 302 may be disposed to overlap in an interlocked state in the length direction, and may prevent a deviation in the length direction of the plurality of adjacent side beams 301 and 302. In addition, as illustrated in FIG. 5, the fastening protrusions 330 formed in the plurality of adjacent side beams 301 and 302 may be disposed to overlap in an interlocked state in the width direction, and may prevent a deviation in the width direction of the plurality of adjacent side beams 301 and 302. In addition, as illustrated in FIG. 6, the fastening protrusions 330 formed in the plurality of adjacent side beams 301 and 302 may be disposed to overlap in an interlocked state in the length direction and the width direction, and may prevent a deviation in the length direction and the width direction of the plurality of adjacent side beams 301 and 302. Through this structure, the deviation in the length direction or in the width direction of the plurality of adjacent side beams 301 and 302 may be prevented to more firmly combine the plurality of adjacent side beams 301 and 302. The crossmember formed through firm combination between the side beams in this way forms a firm load path. In this manner, the battery pack of the present disclosure may be robust against external impact, and the battery cells and the cell blocks including the same may be more effectively fixed and fastened to the battery pack.

FIGS. 7 and 8 are views of various embodiments of the protrusion portion of the present disclosure. The protrusion portion of the present disclosure will be described with reference to FIGS. 7 and 8.

The protrusion portions are disposed to overlap in the front-rear direction such that the plurality of adjacent side beams may be effectively interlocked with each other, and the protrusion portion 310 may have various shapes. For example, as illustrated in FIG. 7, the protrusion portion 310 may have a square protrusion shape having a square cross-section, and as illustrated in FIG. 8, the protrusion portion 310 may have a triangular protrusion shape having a triangle cross-section. However, this configuration is merely an example, and is not limited to the above-described shapes. As long as any shape enables the plurality of adjacent side beams to overlap in the front-rear direction to be effectively interlocked with each other, other various shapes may be adopted. Various shapes such as an arrow shape or a clover shape may be adopted.

Meanwhile, the plurality of through-holes 340 may be formed in the plurality of adjacent side beams 301 and 302, and the plurality of through-holes 340 may be formed apart from each other in a form passing through a single straight line as illustrated in FIGS. 7 and 8.

FIGS. 9 and 10 are views when a portion of the battery pack according to one embodiment of the present disclosure is viewed from above. Referring to FIGS. 9 and 10, the battery pack of the present disclosure will be further described.

As described above, the side beams 301 and 302 may be provided on both sides of the cell block 20 configured such that the plurality of battery cells are stacked. More specifically, the plurality of side beams 301 and 302 provided on both sides of the cell block 20 may include one side beam 301 and the other side beam 302. In addition, the cell blocks 20 provided in the side beams 301 and 302 on both sides as described above may be aligned and disposed in the battery pack, and on an outer periphery of the battery pack, one side beam 301 or the other side beam 302 corresponding to one side beam 301 or the other side beam 302 provided in a side portion of the cell block may be provided to effectively fix and fasten the plurality of cell blocks 20 disposed in the battery pack.

For example, as illustrated in FIG. 9, the side beams may be respectively provided on both sides of the cell block 20. The protrusion portion of one side beam 301 and the protrusion portion 310 of the other side beam 302 may have different protrusion positions on the side beams. More specifically, the protrusion portion of one side beam on one side and the protrusion portion of the other side beam may be formed to alternately protrude on the side beam.

For example, as illustrated in FIG. 9, some of the plurality of through-holes 340 may have an elongated shape. The through-hole 340 formed in one side beam 301 in the plurality of adjacent side beams 301 and 302 may have the elongated shape, and the through-hole 340 formed in the other side beam 302 may have a perfect circle shape. In addition, the through-hole 340 located in the central portion of the plurality of through-holes 340 may have the elongated shape, the through-hole 340 located in the outer peripheral portion may have the perfect circle shape, and the through-hole 340 located between the adjacent through-holes 340 may have the elongated shape.

For example, as illustrated in FIG. 10, some of the plurality of through-holes 340 may have the elongated shape. The through-holes 340 having the elongated shape may be formed in the plurality of adjacent side beams 301 and 302. In addition, the through-hole 340 located in the central portion of the plurality of through-holes 340 may have the elongated shape, the through-holes 340 located in the outer peripheral portion may have the perfect circle shape, and the through-holes 340 located between the adjacent through-holes 340 may have the elongated shape.

Through this structure, the volume expansion caused by the swelling in the battery cell and the cell block including the battery cell may be more effectively concentrated to the center, and the stability of the battery pack of the present disclosure may be improved.

FIG. 11 is a view illustrating a vehicle to which the battery pack according to one embodiment of the present disclosure is applied.

Referring to FIG. 11, in a case of a battery pack according to an embodiment of the present disclosure, as illustrated in FIG. 8, the battery pack may be applied to a battery pack BP of various vehicles V such as internal combustion engine vehicles, electric vehicles, hybrid vehicles, and fuel cell vehicles, and in addition to the vehicle V, the battery pack may be applied to the battery pack BP in various fields such as industrial energy storage system (ESS) or a household ESS, and a small battery pack.

Although the present disclosure has been illustrated and described with reference to the specific embodiments, it will be apparent to those skilled in the art that the present disclosure may be improved and modified in various ways within the scope not departing from the technical concept of the present disclosure as defined by the appended claims.

### [INDUSTRIAL APPLICABILITY]

The present disclosure improves the structure of the crossmember that fixes and connects the cell block to the pack housing, thereby providing a battery pack that is easy to maintain and has excellent safety by effectively absorbing volume expansion due to swelling of battery cells and cell blocks.

## Claims

1. A battery pack comprising:
a plurality of cell blocks configured such that a plurality of battery cells are stacked;
a pack housing for accommodating the cell blocks; and
a crossmember provided between the cell blocks to support the adjacent cell blocks, the crossmember including a plurality of side beams interlocked with each other,
wherein protrusion portions protruding toward each other are formed in the side beams, and the protrusion portions formed in the respective side beams are disposed to overlap each other in an interlocked state in a front-rear direction.

2. The battery pack of claim 1, wherein the side beam extends along a width direction of the battery pack, and the protrusion portion protrudes along a length direction of the battery pack.

3. The battery pack of claim 2, wherein a plurality of the protrusion portions are formed apart from each other.

4. The battery pack of claim 3, wherein in a plurality of the adjacent side beams, a recess portion into which the protrusion portion of another side beam is inserted is formed between the adjacent protrusion portions of one side beam.

5. The battery pack of claim 1, wherein the side beams each are provided on both sides of the cell block, and protruding positions on the side beams are different between the protrusion portion of one side beam and the protrusion portion of the other side beam.

6. The battery pack of claim 1, wherein fastening protrusions protruding toward each other are formed in a plurality of the adjacent side beams, the fastening protrusions are formed in an interlocked form in which the fastening protrusions correspond to each other, a width in a length direction of the fastening protrusion is smaller than a width in a length direction of the protrusion portion, and a width in a width direction of the fastening protrusion is smaller than a width in a width direction of the protrusion portion.

7. The battery pack of claim 6, wherein the fastening protrusions formed in the plurality of adjacent side beams are disposed to overlap each other in the interlocked state in the length direction, and prevent a deviation of the plurality of adjacent side beams in the length direction.

8. The battery pack of claim 6, wherein the fastening protrusions formed in the plurality of adjacent side beams are disposed to overlap each other in the interlocked state in the width direction, and prevent a deviation in the width direction of the adjacent side beams.

9. The battery pack of claim 1, further comprising:
a fastening mechanism penetrating the side beam and the pack housing to fasten the crossmember and the pack housing,
wherein a through-hole through which the fastening mechanism penetrates is formed in the side beam.

10. The battery pack of claim 9, wherein the fastening mechanism has a column shape extending in a height direction.

11. The battery pack of claim 9, wherein in the side beam, the through-hole is formed in the protrusion portion.

12. The battery pack of claim 9, wherein the through-hole has an elongated hole shape extending in one direction.

13. The battery pack of claim 9, wherein the through-hole having an elongated hole shape extending in one direction is formed in one side beam in the plurality of adjacent side beams, and the through-hole having a perfect circle with a constant diameter is formed in the other side beam.

14. The battery pack of claim 9, a plurality of the through-holes are formed apart from each other in the side beam.

15. The battery pack of claim 14, wherein some through-holes in the plurality of through-holes have an elongated hole shape extending in one direction.

16. The battery pack of claim 15, wherein the through-hole located in a central portion in the plurality of through-holes has the elongated hole shape extending in one direction.

17. The battery pack of claim 15, wherein the through-hole located between the adjacent through-holes in the plurality of through-holes has the elongated hole shape extending in one direction.

18. A vehicle comprising:
the battery pack of claim 1.
